Europäisches Patentamt

(19) European Patent Office

Office européen des brevets

(11) Publication number: **0 242 632 B1**

## (12) EUROPEAN PATENT SPECIFICATION

(45) Date of publication of patent specification: **18.12.91**    (51) Int. Cl.⁵: **G06K 15/22**

(21) Application number: **87104531.6**

(22) Date of filing: **27.03.87**

(54) **Apparatus and method for efficient plotting.**

(30) Priority: **21.04.86 US 854217**

(43) Date of publication of application:
**28.10.87 Bulletin 87/44**

(45) Publication of the grant of the patent:
**18.12.91 Bulletin 91/51**

(84) Designated Contracting States:
**DE ES FR GB IT**

(56) References cited:
**DE-A- 2 755 586**
**GB-A- 2 115 565**

**Hewlett-Packard Technical data brochure "A complete family of HP drafting Plotters" Aug. 1985**

(73) Proprietor: **Hewlett-Packard Company Mail Stop 20 B-O, 3000 Hanover Street Palo Alto, California 94304(US)**

(72) Inventor: **Parkhurst, Anthony D.**
**3713 Palo Verde Way**
**Oceanside, CA. 92056(US)**
Inventor: **Halpenny, Thomas J.**
**1840 Bello Hills Lane**
**Escondido, CA. 92026(US)**

(74) Representative: **Liesegang, Roland, Dr.-Ing. FORRESTER & BOEHMERT Widenmayerstrasse 4 Postfach 22 01 37 W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Modern high speed plotters operate under computer control to plot variously colored vectors onto sheets of recording medium. Typically, the host computer provides to the plotter a long string of vectors to be plotted and also provides commands to raise or lower the pen carriage and to select a pen of a certain color from among a set of available pens. The available pens may be carried on the pen carriage, as in the Calcomp Co. model 965 plotter, or may be stored in an accessible pen carousel as in the Hewlett-Packard Co. model HP 7585 plotter which is disclosed in Hewlett-Packard Technical data brochure "A complete family of HP drafting plotters "Technical Data, August 1985. Plotters for plotting coloured lines on a sheet in response to commands from a computer are also known from DE-A 27 55 586.

Attempts have been made in the prior art to optimize the string of vectors before transmission to the plotter. For example, the GrafTek Co. Optplot routine performs a complete sort by color of all of the vectors to be plotted before any vector is transmitted to the plotter. Such a routine requires a large host computer with extensive memory which is often not available for many plotting applications. In addition, improvements in plotting speed due to the optimization are at least partially offset by the additional time required to finish the complete vector sort before any vector is transmitted to the plotter for plotting.

The present inventors have discovered that a large portion of the time spent plotting is actually taken up by pen changes rather than by vector plotting. The applicants have determined that a typical pen change takes on the order of one second to complete while a typical vector can be plotted in approximately ten milliseconds. The inventors have further noted that plotting efficiency decreases dramatically as pen changes occur more frequently than once for each approximately one thousand vector plots.

The present invention is defined by the appendant claims. A preferred embodiment of the present invention operates in accordance with the following principles. A plotter continuously performs a dynamic sort on incoming vectors and stores the vectors by color in linked memory locations. At the same time that the incoming dynamic sort is occuring, the plotter determines the color having the most stored vectors and plots all of the stored vectors of that color before selecting the next color to be plotted. Thus, the plotter simultaneously sorts and plots the incoming vectors so that the number of pen changes is reduced and plotting efficiency is increased without requiring an unproductive sorting period before actual plotting begins.

Figure 1 shows a plotter which is constructed in accordance with the preferred embodiment of the present invention.

Figure 2 is a block diagram of the plotter shown in Figure 1.

Figure 3 is a pictorial representation of the continuous dynamic sort performed by the plotter shown in Figure 1.

Figure 4 is a block diagram of the sorter shown in Figure 2.

Figure 5 shows a portion of the memory shown in Figure 4.

Figures 6-8 are flow charts of various steps performed during plotting by the plotter shown in Figure 1.

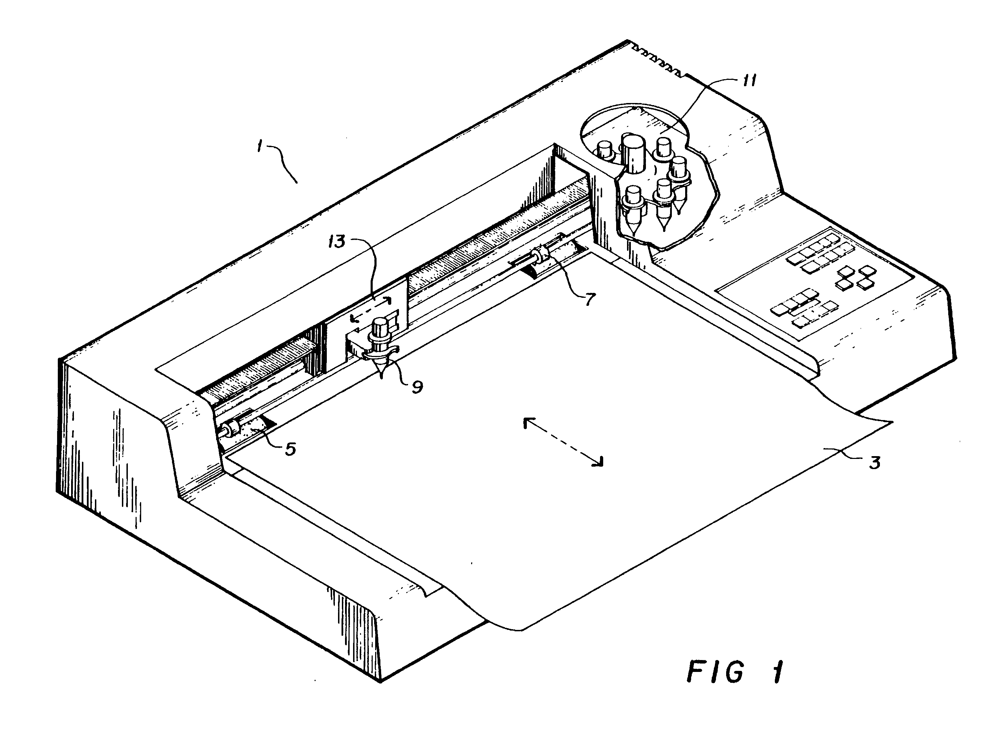

Figure 1 shows a plotter 1 which is constructed in accordance with the preferred embodiment of the present invention. A sheet 3 may be moved in a forward or reverse X-direction by grit wheel/pinch wheel pairs 5, 7 while a pen carriage 13 moves a pen 9 in a Y-direction. A pen carousel 11 contains up to eight pens which may be selected by the carriage 13 in a pen change operation.

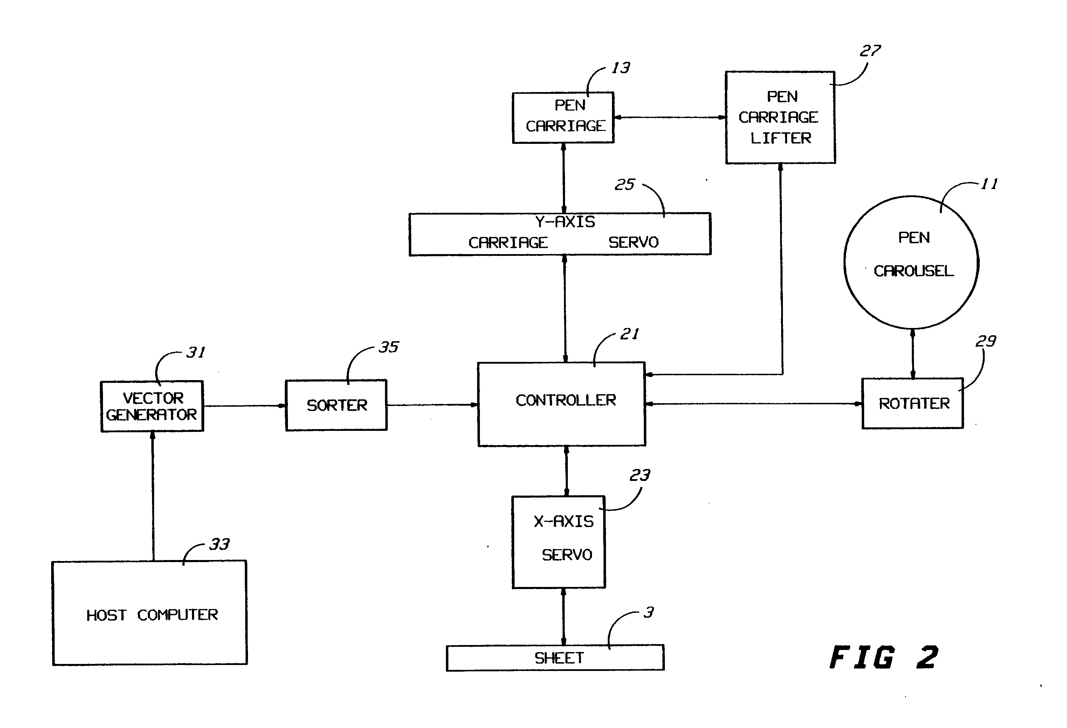

Figure 2 is a block diagram of the plotter 1 shown in Figure 1. A controller 21 actuates a lifter 27 and a Y-axis servo 25 to raise and lower the carriage 13 and to move the carriage 13 back and forth across the sheet 3. The controller 21 also activates a rotater 29 to rotate the carousel 11 as needed to allow the carriage 13 to select a particular pen. A vector generator 31 receives commands from a host computer 33 and generates vectors for use by the controller 21 in plotting on the sheet 3. The elements 5-31 of the plotter 1 are well known and may comprise, e.g., elements used in the Hewlett-Packard Company model HP 7585 plotter.

In operation, a host computer 33, such as a Hewlett-Packard Company model HP 3000 computer using DSG-3000 software, transmits commands in a graphics language to the plotter 1. Typical of such languages is the Hewlett-Packard Company graphics language, HP-GL. HP-GL uses various commands including Pen Up (PU), Pen Down (PD), SELECT PEN n (SP-n) from among the eight pens A-H available in the carousel 11 and the command Plot Absolute (PA-XY) to move the carriage 11 to an X,Y position. The vector generator 31 receives these commands and generates a string of vectors and commands in the same manner as the vector generator of the Hewlett-Packard company model HP 7585 plotter. The vector generator 31 generates 40 bit vectors comprising 16 bits of X information and 16 bits of Y information followed by 7 zero bits and a one bit field indicating a pen up or down condition for the vector. The vector generator 31 intersperses SELECT PEN and other commands between vectors as necessary.

By way of example, the computer 33 could send the following string of commands to the plotter 1 in order to draw a red vector (pen A) from point $X_1,Y_1$ to point $X_2,Y_2$ and a black vector (pen B) from point $X_3,Y_3$ to point $X_4,Y_4$ on the sheet 3:

SP-A
PA-$X_1Y_1$
PD
PA-$X_2Y_2$
SP-B
PU
PA-$X_3Y_3$
PD
PA-$X_4Y_4$

Using the 40-bit vectors and the SELECT PEN command, the vector generator 31 would then generate the following string:

SELECT PEN, A
$(X_1),(Y_1),(0),(U)$
$(X_2),(Y_2),(0),(D)$
SELECT PEN, B
$(X_3),(Y_3),(0),(U)$
$(Y_4),(Y_4),(0),(D)$

which would be sorted by the sorter 35 and would be used by the controller 21 to plot the vectors on the sheet 3.

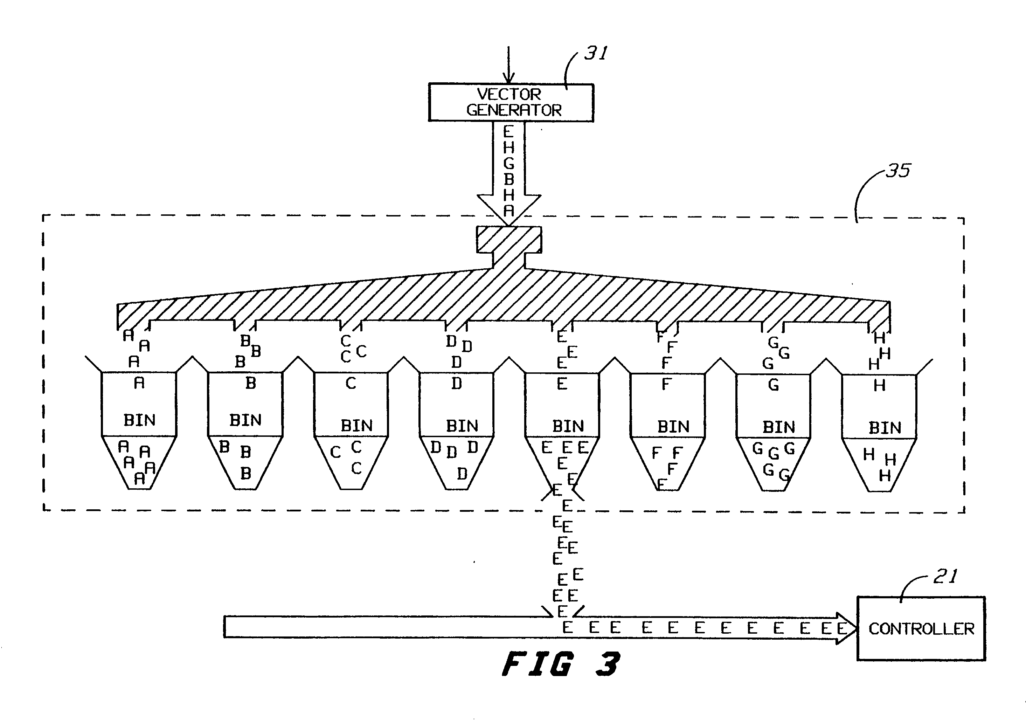

Figure 3 is a pictorial representation of the operation of the sorter 35. The sorter 35 operates continuously to perform a dynamic sort on the vectors generated by the vector generator 31 from the commands received from the host computer 33. No optimization or sorting by the computer 33 is necessary. The vector generator 31 generates vector strings separated by SELECT PEN commands which indicate that the desired color of the plotted vector is to change. Thus, the vectors between SELECT PEN commands are all of the same color. As shown in Figure 3, the output of the vector generator 31 may be characterized pictorially as a string of different colored vectors (A-H) with no interspersed commands.

The sorter 35 stores the individual vectors in eight separate bins A-H depending on color and determines which bin to open to the controller 21. The sorter 35 may be viewed as a continuous flow device with vectors flowing in from the vector generator 31 at the same time that vectors flow out to the controller 21. In the event that the sorter 35 provides input to the controller 21 faster than actual plotting can occur, the output stream of the sorter 35 will be interrupted until the controller 21 is ready for more vectors. When the output stream of the sorter 35 is interrupted, the input stream into the sorter 35 is still active until buffer 51 is full. In the event that the buffer 51 is full, the input stream to the sorter 35 is interrupted until the controller 21 re-activates the output stream of the sorter 35.

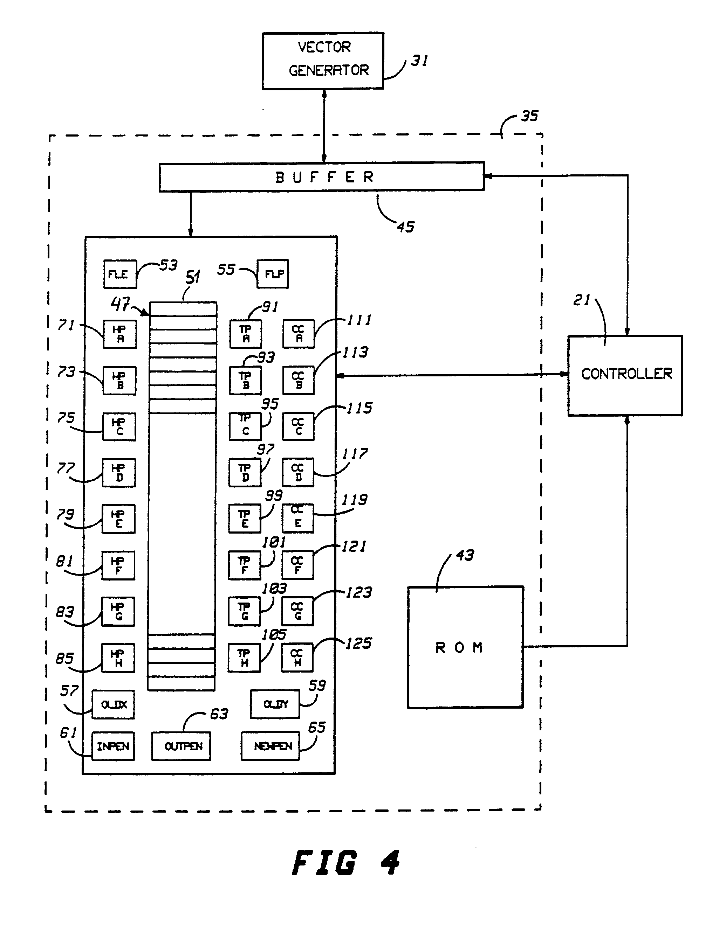

Figure 4 is a block diagram of the sorter 35 which contains a ROM 43, a RAM 47 and a buffer 45. The one kilobyte ROM 43 contains progam information for use by the controller 21 in implementing the dynamic sort. The RAM 47, which may be from 2 to 32 kilobytes long as required, contains: a two byte wide buffer 51; free list pointers FLP 55 and FLE 53; registers OLDX 57, OLDY 59, INPEN 61, OUTPEN 63 and NEWPEN 65; head pointers HP-A 71 through HP-H 85 and tail pointers TP-A 91 through TP-H 105; and, color counters CC-A 111 through CC-H 125.

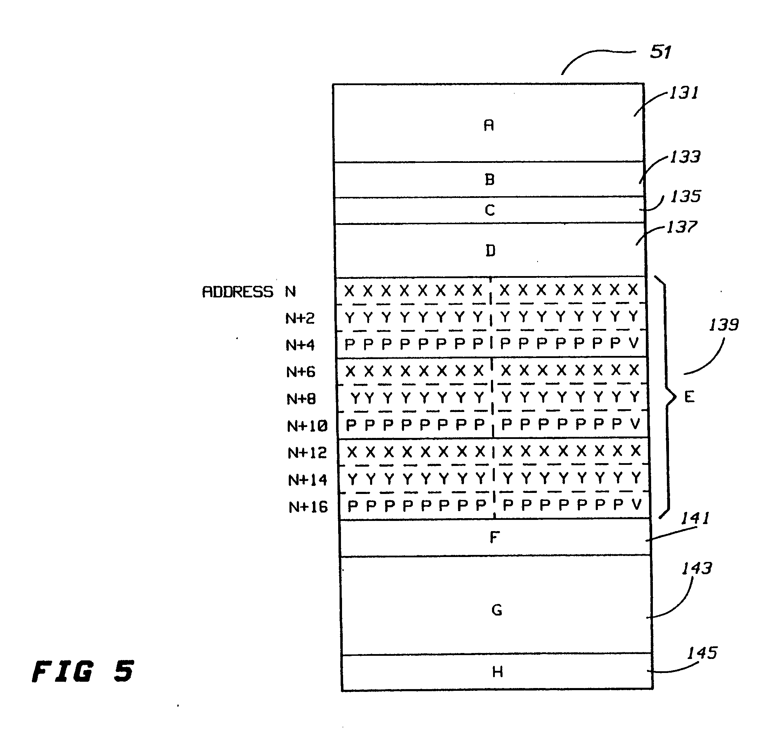

Figure 5 shows the two byte wide buffer 51 in detail. Since the plotter 1 is capable of plotting in eight colors, A-H, the buffer 51 is capable of storing vectors in eight separate A-H bins 131-145. For the most efficient use of space within the buffer 51, the individual bins 131-145 each comprise linked lists with bin size determined by actual requirements. Each stored vector is stored in a six byte location. Within each location a two byte X field contains a vector X coordinate and a two byte Y field contains a vector Y coordinate. A 15-bit P field contains the address of the next location in the particular bin's linked list. Finally, a one bit V field indicates whether the stored vector is to be executed with the pen carriage 27 in either an up or a down position.

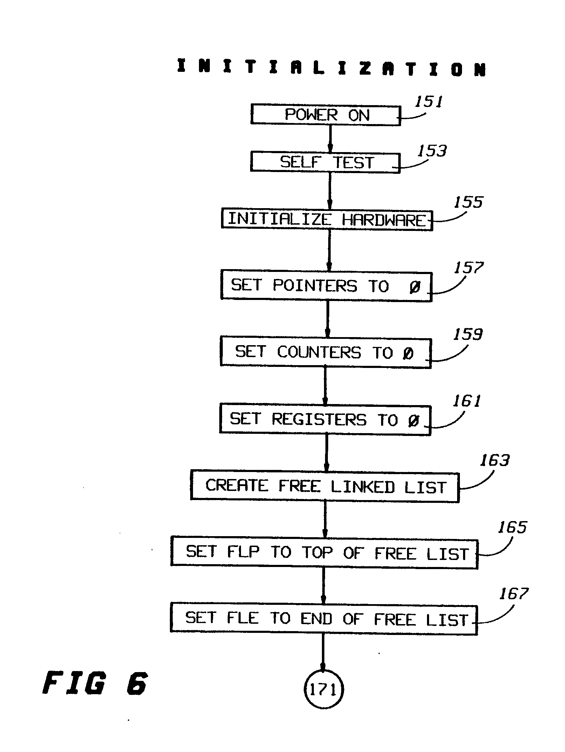

Figures 6-8 are flow charts of initialization, insertion and removal routines performed by the plotter 1 during plotting. In steps 151-155 of Figure 6, the plotter 1 performs standard power on sequences. In steps 157-161, the plotter 1 initializes the pointers, counters and registers 57-125 of RAM 47. In step 163, the plotter 1 creates a single free linked list within the buffer 51 in a well known manner. Starting at the top of the buffer 51, the X, Y and V fields of each three byte location are initialized. Each P field is then set to the address of the next three byte location as a link and the P field of the last location is set to NIL to indicate the end of the free list. In steps 165, 167 the top free list pointer FLP 55 and the free list end pointer FLE 53 are set to contain the addresses of the first and last locations of the free list.

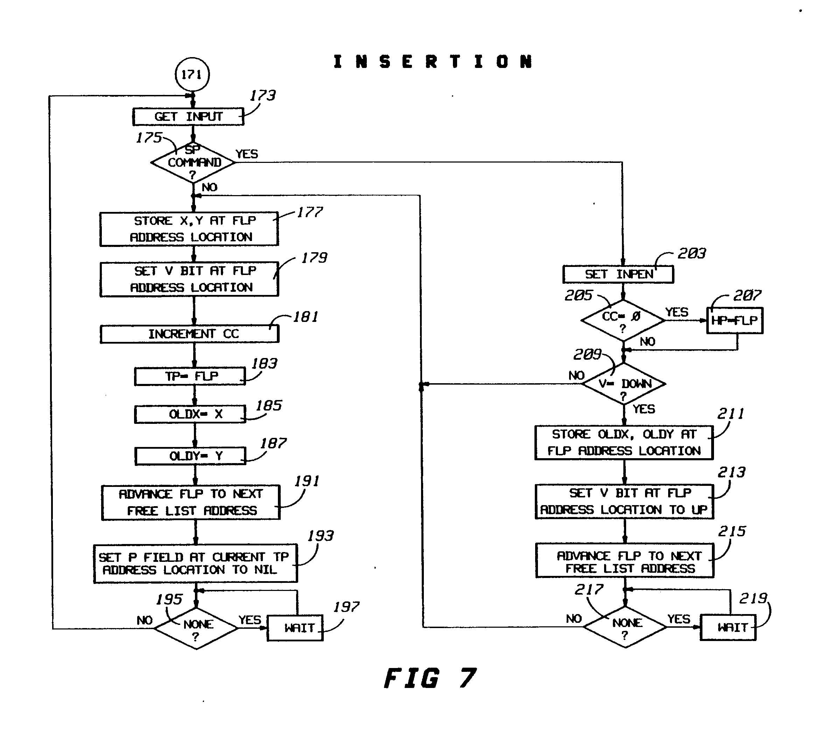

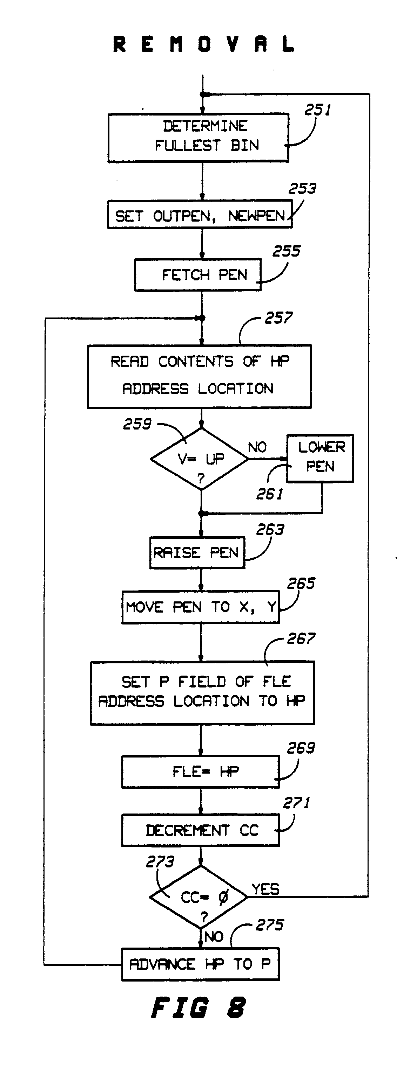

Figure 7 is a flow chart of the steps performed by the plotter 1 during insertion of vectors into the buffer 51 and Figure 8 is a flow chart of the steps performed by the plotter 1 during removal of vectors from the buffer 51 and attendant plotting. Vectors flow into the buffer 51 from the vector generator 31 and computer 33 and concurrently flow out of the buffer 51 to the controller 21 for plotting. Thus, sorting, storing, selecting and plotting are performed concurrently with the steps of receiving and generating.

In steps 173, 175 of Figure 7, the sorter 35 interrogates the vector generator 31 for input and determines if the next input is a SELECT PEN command. If the next input is a vector rather than a command, then the sorter 35 assumes that the vector is of the same color as the immediately preceding vector. In step 177, the sorter 35 reads the X,Y information from the incoming vector and stores the information in the X and Y fields of the top free list location as indicated by the FLP 55. In step 179, the V bit of the top location is set as indicated by the V bit of the incoming vector. In steps 181, 183, the appropriate color counter CC is incremented for an updated total number of locations contained in the particular bin. The appropriate tail pointer TP is set to FLP to point to the current location as now being the last location in this particular bin. OLDX 57 and OLDY 59 are set to X and Y to store the most recent vector coordinates. Finally, FLP 55 is set to the next free list location address (from the P field of the current location) to indicate this next location as the new top free list location and the P field of the last location is set to NIL to indicate the end of that color bin. If all of the free list locations have been used, in steps 195, 197 the sorter 35 halts insertion and waits for removal and plotting to occur to create new free list locations.

If, at step 175, the input is a SELECT PEN command, then the sorter 35 determines that a new bin must be created or else a different existing bin must be added to. In step 203, INPEN is set to the new color A-H indicated by the incoming SELECT PEN command. If the CC counter of the new color is zero then a new bin must be created and the new color head pointer HP is set to FLP to point to the top location of the newly created bin. If the incoming V bit indicates up, then normal flow starting at step 177 is entered. If the incoming V bit indicates down, then a potential problem condition exists since the carriage 27 should normally be moved in an up position from the carousel 11 to the starting position of the next vector to be plotted. In steps 211-219, an up vector is created and inserted before the incoming vector.

Figure 8 shows the steps of the removal routine which are performed by the plotter 1 to remove vectors from the buffer 51 and to plot them onto the sheet 3. Since the routines of Figures 7 and 8 operate concurrently, the routine of Figure 8 may be started at any time that one or more vectors are resident in the buffer 51.

In step 251, the sorter 35 compares the eight color counters CC 111-125 to determine the particular color bin containing the most vectors to be plotted Once this determination is made, OUTPEN 63 and NEWPEN 65 are set to this color to indicate the color currently being plotted In step 255, this particular color pen is fetched from the carousel 11 by the carriage 13. The head pointer HP of the particular color A-H is read to determine the top location within the buffer 51 of the desired color bin to be plotted from. The V bit of this top location is read to determine whether the carriage 13 should be raised or lowered and, in step 265, the carriage 13 is moved to the vector X,Y end position indicated by the top location.

In step 267, the location containing the vector just plotted is added to the end of the free list by setting to FLP the P field of the last free list location (as indicated by the free list end pointer FLE 53). In step 269, the FLE 53 is set to the new end location. The appropriate color counter CC is decremented to indicate removal of a vector (and location) from the particular color bin. If this removal leaves the bin empty, then the sorter 35 again determines the fullest bin to plot from. If vectors still remain in the current color bin, then in step 275 the appropriate head pointer HP is advanced to the contents of the P field of the location just plotted and the new location is read in step 257.

The inventors have analyzed typical plotter software applications and have found that the majority of business applications produce between 100 and 1000 vectors between pen changes. Most computer aided design or manufacturing applications produce only between one and 100 vectors between pen changes. Thus, in most such applications pen changes are made more frequently than every 1000 plotted vectors and, as a result, plotting is both inefficient and slow. To demonstrate the advantages of their invention, the inventors performed a typical plot using the plotter 1 without the sorter 35 and measured the total plotting time as 18 minutes and 46 seconds. In contrast, the plotter 1 in conjunction with the sorter 35 made the same plot in 5 minutes, 30 seconds. The inventors also made the same plot using the plotter 1 without the sorter 35 but with the Graftek Company Optplot routine discussed above. Actual plotting with the Optplot routine required only 4 minutes, 30 seconds, but an initial non-plotting sort period of 2 minutes was required for a total plotting time of 6 minutes, 30 seconds.

**Claims**

1. A plotter (1) for plotting colored lines on a sheet (3) in response to commands from a host (33), wherein the plotter comprises
generation means (31) for receiving the commands from the host (33) and for generating a string of instructions indicative of the colored lines to be plotted;
sorter means (35) coupled to the generation means (31), for sorting the instructions by color and for storing the instructions by color in bins (51) of a memory (47);
controller means (21) coupled to the memory (47), for selecting one bin at a time and for presenting instructions stored in the selected bin at an output;
plotting means (13, 23, 25), coupled to the controller means output, for carrying a selected pen and for plotting on the sheet (3) with the selected pen in response to the instructions; and
wherein the controller means (21) and the plotting means (13, 23, 25) operate concurrently with the generation means (31) and the sorter means (35) so that the plotter (1) is capable of plotting the colored lines while receiving the commands from the host (33).

2. A plotter (1) as in claim 1, **characterized** in that the string of instructions generated by the generation means (31) includes color designators, destination coordinates and pen lift indicators.

3. A plotter (1) as in claim 2, **characterized** in that the sorter means (35) is operative for receiving a color designator and for storing subsequently received destination coordinates and pen lift designators as vectors in a particular bin associated with the received color designator.

4. A plotter (1) as in one of claims 1 to 3, **characterized** in that the controller means (21) is operative for selecting the one bin as that bin containing the most instructions.

5. A plotter (1) as in one of claims 1 to 4, **characterized** in that the controller means (21) is operative for communicating all of the instructions stored in the selected bin to the plotting means (13, 23, 25) before selecting another bin.

6. A plotter (1) as in one of claims 1 to 5, **characterized** in that
the memory (47) comprises a random access memory; and
each bin comprises a linked list.

7. A plotter (1) as in one of claims 1 to 6, **characterized** in that
the plotting means (13, 23, 25) is operative for selecting the selected pen from one or more possible pens; and
the plotting means (13, 23, 25) is further operative for raising and lowering the selected pen and for moving the selected pen relative to the sheet (3).

8. A plotter (1) as in one of claims 1 to 7, **char-**

**acterized** in that the possible pens are contained in a carousel (11) accessible by the plotting means (13, 23, 25).

9. A method for plotting colored lines on a sheet (3) in response to commands from a host (33), the method comprising the steps of:
receiving the commands from the host (33) and generating a string of instructions indicative of the colored lines to be plotted;
sorting the instructions by color;
storing the instructions by color in bins (51) of a memory (47);
selecting a bin;
plotting on the sheet (3) in response to instructions contained in the selected bin; and
wherein the steps of sorting, storing, selecting and plotting are performed concurrently with the steps of receiving and generating.

10. A method as in claim 9, **characterized** in that the step of selecting comprises selecting that bin having the most instructions.

11. A method as in claim 9 or 10, **characterized** in that the step of plotting comprises plotting on the sheet (3) in response to all of the instructions contained in the selected bin; and repeating the steps of selecting and plotting.

**Revendications**

1. Traceur (1) pour tracer des lignes colorées sur une feuille (3) en réponse des ordres d'un ordinateur principal (33), traceur qui comprend un moyen de génération (31) destiné à recevoir les ordres de l'ordinateur principal (33) et à générer une suite d'instructions indiquant les lignes colorées à tracer;
un moyen de triage (35) couplé au moyen de génération (31) pour trier les instructions par couleur et pour stocker les instructions par couleur dans des cases (51) d'une mémoire (47);
un moyen contrôleur (21) couplé à la mémoire (47) pour sélectionner une case à la fois et pour présenter des instructions stockées dans la case sélectionnée sur une sortie;
un moyen de traçage (13, 23, 25) couplé à la sortie du moyen contrôleur et destiné à porter une plume sélectionnée et à effectuer un traçage sur la feuille (3) avec la plume sélectionnée en réponse aux instructions; et
dans lequel le moyen contrôleur (21) et le moyen de traçage (13, 21, 25) fonctionnent en même temps que le moyen de génération (31) et le moyen de triage (35), de sorte que le traceur (1) est capable de tracer les lignes colorées pendant qu'il reçoit les ordres de l'ordinateur principal (33).

2. Traceur (1) selon la revendication 1, caractérisé en ce que la suite d'instructions générée par le moyen de génération (31) comporte des indicateurs de couleur, des coordonnées de destination et des indicateurs de levée de plume.

3. Traceur (1) selon la revendication 2, caractérisé en ce que le moyen de triage (35) est capable de recevoir un indicateur de couleur et de stocker des coordonnées de destination et des indicateurs de levée de plume, reçus consécutivement, en tant que vecteurs dans une case particulière coordonnée à l'indicateur de couleur reçu.

4. Traceur (1) selon une des revendications 1 à 3, caractérisé en ce que le moyen contrôleur (21) est capable de sélectionner ladite case comme la case contenant le plus d'instructions.

5. Traceur (1) selon une des revendications 1 à 4, caractérisé en ce que le moyen contrôleur (21) est capable de communiquer toutes les instructions stockées dans la case sélectionnée au moyen de traçage (13, 23, 25) avant de sélectionner une autre case.

6. Traceur (1) selon une des revendications 1 à 5, caractérisé en ce que la mémoire (47) comprend une mémoire à accès aléatoire ou mémoire vive et chaque case comprend une liste enchaînée.

7. Traceur (1) selon une des revendications 1 à 6, caractérisé en ce que le moyen de traçage (13, 23, 25) est capable de sélectionner la plume parmi plusieurs plumes possibles; et le moyen de traçage (13, 23, 25) est en outre capable de relever et d'abaisser la plume sélectionnée et de la déplacer par rapport à la feuille (3).

8. Traceur (1) selon une des revendications 1 à 7, caractérisé en ce que les plumes possibles sont contenues dans une tourelle (11) à laquelle peut accéder le moyen de traçage (13, 23, 25).

9. Procédé pour tracer des lignes colorées sur une feuille (3) en réponse à des ordres d'un ordinateur principal (33), procédé qui comprend les étapes consistant à:
recevoir les ordres de l'ordinateur principal (33) et générer une suite d'instructions indiquant les lignes colorées à tracer;
trier les instructions par couleur;
stocker les instructions par couleur dans des cases (51) d'une mémoire (47);
sélectionner une case; et
tracer sur la feuille (3) en réponse à des instructions contenues dans la case sélectionnée; et

dans lequel les étapes de triage, de stockage, de sélection et de traçage sont effectuées en même temps que les étapes de réception d'ordres et de génération d'instructions.

10. Procédé selon la revendication 9, caractérisé en ce que l'étape de sélection comprend la sélection de la case contenant le plus d'instructions.

11. Procédé selon la revendication 9 ou 10, caractérisé en ce que l'étape de traçage comprend le traçage sur la feuille (3) en réponse à toutes les instructions contenues dans la case sélectionnée; et la répétition des étapes de sélection et de traçage.

**Patentansprüche**

1. Zeichengerät (Plotter) (1) zum Zeichnen farbiger Linien auf ein Blatt abhängig von Befehlen von einem Host-Rechner (33) mit
einem Erzeuger (31) zum Empfangen der Befehle vom Host-Rechner (33) und zum Erzeugen einer Befehlszeichenfolge, welche die zu zeichnenden farbigen Linien angibt;
einem mit dem Erzeuger (31) gekoppelten Sortierer (35) zum Sortieren der Befehle nach Farben und zum Speichern der Befehle nach Farben in Magazinen (51) eines Speichers (47);
einer mit dem Speicher (47) gekoppelten Steuereinrichtung (21) zum Auswählen immer genau eines Magazins und zum Bereitstellen der in dem ausgewählten Magazin gespeicherten Befehle an einem Ausgang;
einer mit dem Ausgang der Steuereinrichtung gekoppelten Zeichenvorrichtung (13,23,25), die einen ausgewählten Stift trägt und abhängig von den Befehlen mit dem ausgewählten Stift auf das Blatt (3) zeichnet; und
bei dem die Steuereinrichtung (21) und die Zeichenvorrichtung (13,23,25) gleichzeitig mit dem Erzeuger (31) und dem Sortierer (35) arbeiten, so daß das Zeichengerät (1) während des Empfangs der Befehle vom Host-Rechner (33) die farbigen Linien zeichnen kann.

2. Zeichengerät nach Anspruch 1, dadurch **ge-**

**kennzeichnet,** daß die vom Erzeuger (31) gebildete Befehlszeichenfolge Farbbezeichner, Zielkoordinaten und Stifthubindikatoren umfaßt.

3. Zeichengerät nach Anspruch 2, dadurch **gekennzeichnet,** daß der Sortierer (35) Farbbezeichner empfangen und nachfolgend empfangene Zielkoordinaten und Stifthubindikatoren als Vektoren in einem besonderen, dem empfangenen Farbbezeichner zugeordneten Magazin speichern kann.

4. Zeichengerät nach einem der Ansprüche 1 bis 3, dadurch **gekennzeichnet,** daß die Steuereinrichtung (21) das eine Magazin enthaltend die meisten Befehle auswählen kann.

5. Zeichengerät nach einem der Ansprüche 1 bis 4, dadurch **gekennzeichnet,** daß die Steuereinrichtung (21) alle in dem ausgewählten Magazin gespeicherten Befehle zu der Zeichenvorrichtung (13,23,25) überträgt, bevor sie ein anderes Magazin auswählt.

6. Zeichengerät nach einem der Ansprüche 1 bis 5, dadurch **gekennzeichnet,** daß der Speicher (47) einen Direktzugriffsspeicher (RAM) und jedes Magazin eine Verknüpfungstabelle aufweisen.

7. Zeichengerät nach einem der Ansprüche 1 bis 6, dadurch **gekennzeichnet,** daß die Zeichenvorrichtung (13,23,25) den ausgewählten Stift aus einem oder mehreren verfügbaren Stiften auswählen kann, und daß die Zeichenvorrichtung (13,23,25) ferner den ausgewählten Stift heben, senken und relativ zum Einzelblatt (3) bewegen kann.

8. Zeichengerät nach einem der Ansprüche 1 bis 7, dadurch **gekennzeichnet,** daß die verfügbaren Stifte in einem der Zeichenvorrichtung (13,23,25) zugänglichen Karussel (11) enthalten sind.

9. Verfahren zum Zeichnen farbiger Linien auf ein Einzelblatt (3) abhängig von Befehlen von einem Host-Rechner (33) das folgende Verfahrensschritte aufweist:
Empfangen der Befehle vom Host-Rechner (33) und Erzeugen einer Befehlszeichenfolge, die die zu zeichnenden farbigen Linien angibt;
Sortieren der Befehle nach Farben;
Speichern der Befehle nach Farben in Magazinen (51) eines Speichers (47);
Auswählen eines Magazins;
Zeichnen auf ein Blatt (3) abhängig von Befehlen in den ausgewählten Magazinen;

wobei die Verfahrensschritte Sortieren, Speichern, Auswählen und Zeichnen gleichzeitig mit den Verfahrensschritten Empfangen und Erzeugen ausgeführt werden.

10. Verfahren nach Anspruch 9, dadurch **gekennzeichnet,** daß der Verfahrensschritt Auswählen das Auswählen des Magazins enthaltend die meisten Befehle umfaßt.

11. Verfahren nach Anspruch 9 oder 10, dadurch **gekennzeichnet,** daß der Verfahrensschritt Zeichnen das Zeichnen auf ein Blatt (3) in Abhängigkeit von allen in dem ausgewählten Magazin enthaltenen Befehlen und die Wiederholung der Schritte Auswählen und Zeichnen umfaßt.

FIG 1

EP 0 242 632 B1

FIG 2

PEN CARRIAGE 13

PEN CARRIAGE LIFTER 27

Y-AXIS CARRIAGE SERVO 25

PEN CAROUSEL 11

VECTOR GENERATOR 31

SORTER 35

CONTROLLER 21

ROTATER 29

HOST COMPUTER 33

X-AXIS SERVO 23

SHEET 3

EP 0 242 632 B1

**FIG 3**

EP 0 242 632 B1

FIG 4

51

131

A

133

B

135

C

137

D

ADDRESS N X X X X X X X X X X X X X X X X
N+2 Y Y Y Y Y Y Y Y Y Y Y Y Y Y Y Y
N+4 P P P P P P P P P P P P P P P V
N+6 X X X X X X X X X X X X X X X X
N+8 Y Y Y Y Y Y Y Y Y Y Y Y Y Y Y Y
N+10 P P P P P P P P P P P P P P P V
N+12 X X X X X X X X X X X X X X X X
N+14 Y Y Y Y Y Y Y Y Y Y Y Y Y Y Y Y
N+16 P P P P P P P P P P P P P P P V

139

E

F

141

G

143

H

145

**FIG 5**

# INITIALIZATION

FIG 6

POWER ON — 151

SELF TEST — 153

INITIALIZE HARDWARE — 155

SET POINTERS TO Ø — 157

SET COUNTERS TO Ø — 159

SET REGISTERS TO Ø — 161

CREATE FREE LINKED LIST — 163

SET FLP TO TOP OF FREE LIST — 165

SET FLE TO END OF FREE LIST — 167

(171)

# INSERTION

**FIG 7**

## R E M O V A L

```
┌─────────────────────┐
│     DETERMINE       │  251
│    FULLEST BIN      │
└─────────────────────┘
           │
┌─────────────────────┐
│  SET OUTPEN, NEWPEN │  253
└─────────────────────┘
           │
     ┌───────────┐
     │ FETCH PEN │  255
     └───────────┘
           │
┌─────────────────────┐
│  READ CONTENTS OF HP│  257
│  ADDRESS LOCATION   │
└─────────────────────┘
           │
     259  ◇              ┌────────┐
        V= UP    ──NO──→ │ LOWER  │
          ?              │  PEN   │
           │             └────────┘
                    261
           │
     ┌───────────┐
     │ RAISE PEN │  263
     └───────────┘
           │
  ┌──────────────────┐
  │ MOVE PEN TO X, Y │  265
  └──────────────────┘
           │
┌─────────────────────┐
│  SET P FIELD OF FLE │  267
│  ADDRESS LOCATION TO HP│
└─────────────────────┘
           │
     ┌───────────┐
     │  FLE= HP  │  269
     └───────────┘
           │
  ┌──────────────┐
  │ DECREMENT CC │  271
  └──────────────┘
           │
     273  ◇
        CC= ∅    ──YES──
          ?
           │
          NO   275
           │
  ┌──────────────┐
  │ ADVANCE HP TO P │
  └──────────────┘
```

## FIG 8